# EUROPÄISCHE PATENTANMELDUNG

(11) **EP 4 008 463 A1**
(43) Veröffentlichungstag der Anmeldung: **08.06.2022**
(21) Anmeldenummer: 20210911.2
(22) Anmeldetag: 01.12.2020
(51) Int. Cl.: B23B 51/10, B23D 79/02

(54) **ZERSPANUNGSWERKZEUG UND VERFAHREN ZUR ENTGRATUNG EINANDER DURCHDRINGENDER BOHRUNGEN**

(71) Anmelder: Beier, Hans-Michael, 12623 Berlin (DE)
(72) Erfinder: Beier, Hans-Michael, 12623 Berlin (DE)
(74) Vertreter: Schulz Junghans Patentanwälte PartGmbB

(57) **Zusammenfassung**

Die vorliegende Erfindung betrifft ein Zerspanungswerkzeug, welches insbesondere zur Entgratung von Kanten in Hohlräumen, wie zum Beispiel zur Entfernung eines Grats an Kanten einander kreuzender Bohrungen ausgebildet ist.

Das Zerspanungswerkzeug dient insbesondere zur Entgratung von Kanten in Hohlräumen, wie zur Entgratung einander durchdringender Bohrungen (1,2), insbesondere von Bohrungen (1,2), die schräg zueinander verlaufen und/ oder deren Längsachsen keinen gemeinsamen Schnittpunkt aufweisen, und umfasst einen sich entlang einer Längsachse (11) erstreckenden Schneidenhalter (20) sowie einen daran angeordneten Schneidenkörper (30), der eine erste Hauptschneide (31) aufweist, deren Schneidkante (32) in einem Winkel α von 80° bis 145° zur Längsachse (11) verläuft, zwecks Entgratung von wenigstens einer Kante an einem Übergang zwischen einander durchdringender Bohrungen (1,2) in einem Neigungswinkel ε von 25° bis 90°.

## Beschreibung

Die vorliegende Erfindung betrifft ein Zerspanungswerkzeug, welches insbesondere zur Entgratung von Kanten in Hohlräumen, wie zum Beispiel zur Entfernung eines Grats an Kanten einander kreuzender Bohrungen ausgebildet ist.

Weiterhin betrifft die vorliegende Erfindung ein Verfahren zur Entgratung einander durchdringender Bohrungen an einer an einem ersten Ende einer Innenseite eines Hohlzylinders räumlich verlaufenden Kante, insbesondere von Grat an einer durch einander durchdringenden Bohrungen ausgebildeten Kante, welches insbesondere mit dem erfindungsgemäßen Zerspanungswerkzeug auszuführen ist.

Es ist erforderlich, nach Einbringung von Hohlräumen in Körpern, wie zum Beispiel nach erfolgter Bohrung von Vollmaterialien, dort entstandene Grate zu entfernen. Kompliziert ist dieser Vorgang insbesondere bei ineinander oder durchdringenden Bohrungen bzw. Hohlräumen. Aufgrund dessen, dass dabei entstehende Kanten und daran vorhandener Grat relativ weit entfernt und schwer zugänglich für Bearbeitungswerkzeuge sind, ist eine Gratentfernung hier relativ Zeit- und/oder werkzeugintensiv. Zu dem bedarf es nach erfolgtem Entgratungsvorgang einer relativ aufwendigen Kontrolle, ob der Grat vollständig entfernt wurde. Insbesondere bei Führung von strömenden Medien kann sich ein weiterhin existenter Grat ungünstig hinsichtlich der erzeugten Strömungsverhältnisse auswirken oder auch gegebenenfalls bei Abbruch von Gratbestandteilen zu einer Störung angeschlossener Aggregate führen.

Es besteht daher die Notwenigkeit, erzeugten Grat vollständig und zuverlässig zu entfernen.

Schwierig ist eine derartige Gratentfernung insbesondere bei sich spitzwinklig kreuzenden Bohrungen. Die dabei einstehende Durchdringungskante ist in Form eines Ovals ausgebildet, welches räumlich verläuft.

Das heißt, dass dieses Oval eine Kurve im Raum definiert, die je nach Kreuzungswinkel der Bohrungen symmetrisch oder asymmetrisch ausgebildet ist. Der Winkel der Kante, die dieses Oval ausbildet, ist über den Verlauf der Kurve nicht konstant. Je nach Kreuzungswinkel der Bohrungen variiert auch der Kantenwinkel θ üblicherweise in einem Bereich zwischen 15 ° bis 165 °. Des Weiteren wirken sich Toleranzen hinsichtlich der Abstände, des Winkels und des Durchmessers der sich kreuzenden Bohrungen ebenfalls auf die Größe des Kantenwinkels θ in einem jeweiligen Punkt der räumlichen Kurve der Kante aus.

Es sind unterschiedliche Verfahren und Einrichtungen zum Entfernen von Grat in Bohrungen bekannt. Es hat sich dabei herausgestellt, dass insbesondere Fräsverfahren auf Grund der Ausbildung von Sekundär-Grat nicht optimal sind, um Grat in Hohlräumen, insbesondere in sich kreuzenden Bohrungen, zu beseitigen. Der Sekundärgrat muss mit einem zusätzlichen Arbeitsgang entfernt werden, was sich negativ auf den Zeit- und damit auch auf den Kostenaufwand auswirkt.

Aus der DE 10 2007 020 207 B9 ist ein Werkzeug zur Beseitigung von Grat an den Stoßkanten von schräg verlaufenen Querbohrungen bekannt, welches einen Werkzeugschaft mit einem Einspannende und einen am werkzeugseitigen Schaftende angeordneten Stützkörper aufweist. Der Stützkörper ist dazu eingerichtet, einen Schneidkörper abzustützen, der eine Schneide mit einer Schulter aufweist. Der Schneidkörper kann dadurch mit einer definierten Anpresskraft an eine zu entgratende Kante angelegt werden. Bei Drehung des Werkzeuges um seine Längsachse kann die Schneide des Schneidkörpers die zu entgratende Kante abfahren und dadurch dort bestehenden Grat beseitigen. In Bereichen der Kante, in denen diese den kleinsten Kantenwinkel θ aufweist wird mit dem Werkzeug der Grat herumgebogen, so dass mit einem nachfolgenden Bearbeitungsschritt dieser herumgebogene Grat abgetrennt werden kann.

Die DE 10 2012 005 246 A1 lehrt ein Entgratwerkzeug zur Entgratung von insbesondere unrunden Ausnehmungen in Werkstücken. Dieses Entgratwerkzeug ist dazu ausgebildet, als ein schrittweise um seine Längsachse drehendes und/oder verschiebend angetriebenes und in Richtung seiner Längsachse oszillierend verschiebbares Stoß- und/oder Ziehwerkzeug zu funktionieren. In entsprechender Weise ist eine Schneide des Werkzeuges ausgebildet, um den Grat mittels Aufbringung einer Druckkraft umzuformen und anschließend abtrennen zu können. Das bedeutet, dass zwei Arbeitsschritte in Kombination miteinander auszuführen sind, nämlich die Umformung und das Abtrennen. Dies bewirkt eine diskontinuierliche Arbeitsweise und die Bildung von Sekundärgrat, der sich entweder qualitätsmindernd auf das herzustellende Produkt auswirkt oder mit weiteren Arbeitsschritten zu entfernen ist.

Aus der DE 10 215 004 B4 ist ein Entgratwerkzeug bekannt, welches in ähnlicher Weise wie das Werkzeug der DE 10 2007 020 207 B9 einen Werkzeugschaft mit einem Einspannende sowie einen Stützkörper aufweist, der einen Schneidkörper abstützt. Die Aufbringung eines Fluid-Drucks bewirkt das Ausfahren und Anlegen des Schneidkörpers an die zu entgratende Kante. Die Schneide des Schneidkörpers ist derart ausgebildet, dass sie im Rechtslauf und im Linkslauf eingesetzt werden kann.

Allerdings bringt die Entfernung von Grat an einander durchdringenden Bohrungen insbesondere im durch den kleinsten Winkel zwischen den Bohrungen eingeschlossenen Bereich weiterhin technologische Schwierigkeiten mit sich, da ein dort befindlicher Grat von herkömmlichen Entgratungswerkzeugen und den damit durchgeführten Bearbeitungsverfahren gegebenenfalls nur umgebogen wird, nicht aber gewährleistet ist, dass der Grat sauber und rückstandslos entfernt wird.

Der vorliegenden Erfindung liegt die Aufgabe zu Grunde, ein Zerspanungswerkzeug sowie ein Verfahren zur Entgratung einander durchdringender Bohrungen zur Verfügung zu stellen, mit welchen in einfacher, zuverlässiger und kostengünstiger Weise die Entfernung von Grat an einander durchdringenden Hohlzylindern, insbesondere an einer Kante einander durchdringender oder kreuzender Bohrungen, möglich ist.

Diese Aufgabe wird durch das erfindungsgemäße Zerspanungswerkzeug nach Anspruch 1, sowie durch das Verfahren zur Entgratung einander durchdringender Bohrungen nach Anspruch 11 gelöst. Vorteilhafte Ausführungsformen des erfindungsgemäßen Zerspanungswerkzeugs sind in den Unteransprüchen 2-10 angegeben. Vorteilhafte Ausgestaltungen des Verfahrens zur Entgratung einander durchdringender Bohrungen sind in den Unteransprüchen 11-15 angegeben.

Ein erster Aspekt der vorliegenden Erfindung betrifft ein Zerspanungswerkzeug, welches insbesondere zur Entgratung von Kanten in Hohlräumen, wie zum Beispiel zur Entgratung einander durchdringender Bohrungen, insbesondere von Bohrungen, die schräg zueinander verlaufen und/ oder deren Längsachsen keinen gemeinsamen Schnittpunkt aufweisen, eingerichtet ist. Das Zerspanungswerkzeug umfasst einen sich entlang einer Längsachse erstreckenden Schneidenhalter sowie einen daran angeordneten Schneidenkörper, der eine erste Hauptschneide aufweist, deren Schneidkante in einem Winkel α von 80° bis 145° zur Längsachse verläuft, zwecks Entgratung von wenigstens einer Kante an einem Übergang zwischen einander durchdringender Bohrungen in einem Neigungswinkel ε von 25° bis 90°. Der Schneidenhalter kann auch als Schaft bezeichnet werden. Der Schneidenkörper ist insbesondere beweglich in Bezug zur Längsachse bzw. zum Schneidenhalter angeordnet.

In speziellen Ausführungsformen können auch Bohrungen entgratet werden, die einen Neigungswinkel ε bis zu 95° zueinander aufweisen, in Abhängigkeit von der dort vorhandenen Form des Grates.

Der Winkel α ist dabei zu messen zwischen der Schneidkante der ersten Hauptschneide und der Längsachse, wobei einer den Winkel α einschließenden Schenkel durch die Schneidkante der ersten Hauptschneide selbst ausgebildet ist, und der zweite Schenkel durch die Längsachse dargestellt ist, und die von den Schenkeln begrenzte Ebene durch Material des Schneidenkörpers und/ oder des Schneidenhalters ausgebildet ist. Entsprechend ist ein Komplementärwinkel zum Winkel α durch einen Freiraum zwischen Schneidkante der ersten Hauptschneide und dem Schneidenkörper und/ oder dem Schneidenhalter ausgebildet. Der Schneidenkörper kann auch als "Formschneide" bezeichnet werden.

Insbesondere kann dabei der Winkel α betragen:
i) zwischen 80° und 95°, insbesondere 85°,
ii) zwischen 95° und 110°, insbesondere 100°,
iii) zwischen 110° und 125°, insbesondere 115°,
iv) zwischen 125° und 135°, insbesondere 130°, oder
v) zwischen 135° und 150°, insbesondere 145°.

Dabei ist vorgesehen, dass der Schneidenkörper
mit dem Winkel α zwischen 80° und 95° eingesetzt wird für einen Neigungswinkel ε zwischen den Bohrungen von ε= 85°-95°; insbesondere von ε= 90°;
mit dem Winkel α zwischen 95° und 110° eingesetzt wird für einen Neigungswinkel ε zwischen den Bohrungen von ε= 70°-85°; insbesondere von ε= 75°;
mit dem Winkel α zwischen 110° und 125° eingesetzt wird für einen Neigungswinkel ε zwischen den Bohrungen von ε= 55°-70°; insbesondere von ε= 60°;
mit dem Winkel α zwischen 125° und 135° eingesetzt wird für einen Neigungswinkel ε zwischen den Bohrungen von ε= 45°-55°; insbesondere von ε= 45°, oder.
mit dem Winkel α zwischen 135° und 150° eingesetzt wird für einen Neigungswinkel ε zwischen den Bohrungen von ε= 25°-45°; insbesondere von ε= 30°,

Weiterhin kann am Schneidenkörper eine erste Nebenschneide ausgebildet sein, deren Schneidkante in einem Winkel zwischen den Schneidkanten β von 10° bis 150°, insbesondere 115°, zur Schneidkante der ersten Hauptschneide verläuft.

Dabei ist insbesondere vorgesehen, dass sich die erste Nebenschneide im Wesentlichen an die erste Hauptschneide anschließt, wobei in einer Richtung senkrecht zur Längsachse sich die erste Hauptschneide zwischen der ersten Nebenschneide und der Längsachse befindet. Der Übergang zwischen der ersten Hauptschneide und der ersten Nebenschneide kann mit einem Radius ausgebildet sein.

Dabei ist die vorliegende Erfindung nicht darauf eingeschränkt, dass eine jeweilige Schneide bzw. deren Schneidkante einen linearen Verlauf aufweist, sondern eine Schneidkante kann auch einen leicht konvex gewölbten oder konkav gewölbten Verlauf haben, wobei die Schneidkante in ihrer Wölbung insbesondere einen abschnittsweise logarithmischen Spiralverlauf haben kann, oder auch als Teilkreis oder als Evolvente ausgeführt sein kann.

Damit können Beschädigungen der Oberfläche der Hauptbohrung verhindert werden.

In einer vorteilhaften Ausführungsform des Weiteren vorgesehen, dass der Schneidenkörper in Bezug zur Längsachse im Wesentlichen senkrecht verschiebbar gelagert ist.

Bezogen auf eine Längsachse als Rotationsachse des Zerspanungswerkzeugs ist also vorgesehen, dass der Schneidenkörper radial beweglich gelagert ist. Dabei ist der Schneidenkörper in seiner jeweiligen Position mechanisch abgestützt. Insbesondere kann dabei der Schneidenkörper in dieser Bewegung federnd abgestützt sein, wobei ein elastisch wirkender Elastomerkörper als Stützkörper verwendet werden kann, um die federnde Abstützkraft zu realisieren.
In einer alternativen Ausführungsform kann der Schneidenkörper hydraulisch oder pneumatisch abgestützt sein.

Für diese Ausführungsform weist das Zerspanungswerkzeug eine Fluid-Zufuhreinrichtung auf, mit dem der Schneidenkörper einem statischen und/oder dynamischen Fluiddruck ausgesetzt wird, sodass sich der Schneidenkörper bewegen kann.

Die konkrete konstruktive Ausführung des Zerspanungswerkzeuges im Bereich des Stützkörpers sowie dessen Betätigung und Auswirkung auf das Schneidelement ist in der DE 10215004 B4 dargelegt, deren diesbezügliche Ausführungen hiermit ausdrücklich in den Offenbarungsgehalt der vorliegenden Patentanmeldung einbezogen werden.

Das erfindungsgemäße Zerspanungswerkzeug ist aber nicht darauf eingeschränkt, lediglich ein Schneidelement zu umfassen, sondern es kann - insbesondere bei rotationssymmetrischer Ausbildung eines Werkzeugschaftes - an dessen Umfang mehrere Schneidelemente aufweisen, die bevorzugt in beschriebener Weise radial aus- und einfahrbar sind.

Das Zerspanungswerkzeug arbeitet im Allgemeinen rotierend durch eine Hauptbohrung und fährt dabei die zu entgratende Kante an der Bohrungsverschneidung bzw. -durchdringung ab. Der Schneidenkörper hat keine starre Position, sondern ist beweglich gelagert. Das ermöglicht den Ausgleich von Streuungen in den Abmessungen des Grates und von Toleranzen in der Lage des Gratbasisprofils. Gleichzeitig wird durch die bewegliche Lagerung ein Ausweichen des Schneidenkörpers an den entgrateten und bearbeiteten Kanten ermöglicht, um die erforderliche Form und ggfs. auch Oberflächen des Werkstücks zu erhalten. Durch das Ausweichen des Schneidenkörpers wird der weitere Materialabtrag vermindert oder vollständig verhindert. Ein wesentlicher Vorteil bei diesem System besteht in der Möglichkeit, das Werkzeug im Rechts- und Linkslauf einsetzen zu können.

Für mehr Einsatzmöglichkeiten kann das Zerspanungswerkzeug derart ausgeführt sein, dass am Schneidenkörper und im Wesentlichen um eine Achse, die senkrecht zur Längsachse verläuft, gespiegelt der ersten Hauptschneide gegenüberliegend eine gespiegelte erste Hauptschneide ausgebildet ist.

Das bedeutet, dass die Kontur und damit auch der Verlauf der Schneidkante der ersten Hauptschneide durch die gespiegelte erste Hauptschneide gespiegelt am Schneidenkörper angeordnet ist.

In einer weiteren Ausgestaltung kann auch vorgesehen sein, dass die sich im Wesentlichen an die erste Hauptschneide anschließende erste Nebenschneide um die Achse, die senkrecht zur Längsachse verläuft, gespiegelt am Schneidenkörper als gespiegelte erste Nebenschneide angeordnet ist. Entsprechend erhält in dieser Ausführungsform der Schneidenkörper in einem Bereich eine spiegelsymmetrische Ausgestaltung.
Dies dient dazu, bei Einführung in unterschiedliche Bohrungen bzw. von unterschiedlichen Seiten mit entsprechend ausgeführten Schneidkanten Schneidoperationen zur Entfernung von Grat an einander schräg durchdringenden Bohrungen vornehmen zu können.

In einer robusten und vielfältig einsetzbaren Ausführungsform des Zerspanungswerkzeugs beträgt der Freiwinkel der ersten Hauptschneide 0°. Der dadurch entsprechend groß gestaltete Keilwinkel der ersten Hauptschneide ermöglicht eine lange Standzeit des Zerspanungswerkzeugs. In weiteren Ausgestaltungsformen des Zerspanungswerkzeugs ist vorgesehen, dass auch die erste Nebenschneide und/oder gegebenenfalls vorhandene gespiegelte Schneiden der ersten Hauptschneide und/ oder der ersten Nebenschneide ebenfalls jeweils einen Freiwinkel von 0° aufweisen.

Weiterhin kann das Zerspanungswerkzeug ein Anlageelement zur Anlage an einer Wandung einer Bohrung aufweisen. Dieses Anlageelement hat insbesondere eine geglättete und/oder parallel zur Längsachse verlaufende Oberfläche oder Kante, mit der das Anlageelement und somit das Zerspanungswerkzeug an der Innenseite einer Bohrung angelegt werden kann, in der das Zerspanungswerkzeug angeordnet ist. Insbesondere kann dabei ein Radius zwischen der Kante der ersten Hauptschneide und der Außenseite des Anlageelements existieren. Das Anlageelement sorgt für eine zusätzliche Führung des Zerspanungswerkzeug beim Entgratungsvorgang.
Das Anlageelement kann dabei ein integraler Bestandteil des Schneidenkörpers sein, oder aber auch Bestandteil des Schaftes des Zerspanungswerkzeugs.

In Abhängigkeit vom Winkel der Schneidkante der ersten Hauptschneide in Bezug zur Längsachse des Zerspanungswerkzeugs existiert also auch ein entsprechender Winkel zwischen der Schneidkante der ersten Hauptschneide und dem Anlageelement.

In einer weiteren vorteilhaften Ausführungsform des Zerspanungswerkzeugs ist vorgesehen, dass der Schneidenkörper in einer ersten Ebene die erste Hauptschneide ausbildet, wobei der Schneidenkörper in einer zweiten Ebene, die im Wesentlichen parallel zur ersten Ebene verläuft, eine zweite Hauptschneide ausbildet, zur Entgratung von Kanten in Hohlräumen in entgegengesetzten Drehrichtungen. Eine Ebene, in der die Längsachse des Zerspanungswerkzeugs verläuft, ist insbesondere zwischen der ersten Ebene und der zweiten Ebene angeordnet. Wie auch zur ersten Hauptschneide vorgesehen verläuft die Schneidkante der zweiten Hauptschneide in einem Winkel α von 80° bis 145° zur Längsachse, zwecks Entgratung von wenigstens einer Kante an einem Übergang zwischen einander durchdringender Bohrungen in einem Winkel ε von 25° bis 90°.

In einer weiteren Ausgestaltung kann auch vorgesehen sein, dass auch die sich im Wesentlichen an die zweite Hauptschneide anschließende zweite Nebenschneide um die Achse, die senkrecht zur Längsachse verläuft, gespiegelt am Schneidenkörper als gespiegelte zweite Nebenschneide angeordnet ist.
Letztendlich kann der Schneidenskörper derart ausgebildet sein, dass er an zwei zueinander parallelen Ebenen Schneiden mit Schneidkanten aufweist, die in gleichen Winkeln zur Längsachse verlaufen, um derart mit dem Zerspanungswerkzeug in entgegengesetzten Drehrichtungen gleiche Schneidoperationen durchführen zu können.
Das bedeutet, dass die Schneiden in der zweiten Ebene deckungsgleich zu den Schneiden in der ersten Ebene ausgeführt sein können.

Ein weiterer Aspekt der vorliegenden Erfindung ist ein Zerspanungssystem, insbesondere zur Entgratung von Kanten in Hohlräumen, wie zur Entgratung einander durchdringender Bohrungen, insbesondere von Bohrungen, die schräg zueinander verlaufen und/ oder deren Längsachsen keinen gemeinsamen Schnittpunkt aufweisen. Dieses Zerspanungssystem umfasst ein erfindungsgemäßes Zerspanungswerkzeug, sowie eine Antriebseinrichtung zum Bewegen des Zerspanungswerkzeugs. Die Antriebseinrichtung ist dazu eingerichtet, das Zerspanungswerkzeug in einer kombinierten Bewegung um eine Rotationsachse zu drehen, die parallel zur Längsachse des Zerspanungswerkzeugs verläuft, und gleichzeitig das Zerspanungswerkzeug in einer translatorischen Bewegung entlang der Längsachse zu verschieben.

Das bedeutet, dass die Rotationsachse einen zumindest geringen parallelen Versatz aufweist zur Längsachse des Zerspanungswerkzeugs.

Insbesondere ist das Zerspanungssystem dazu eingerichtet, eine Spanfläche der ersten Hauptschneide in einem Winkel in Bezug zu einer im Berührungspunkt der Schneidkante der ersten Hauptschneide am zu entgratenden Werkstück an die Bewegungsbahn der ersten Hauptschneide angelegten Tangente zu führen, der geringer ist als 90°.

Dies betrifft insbesondere die Ausführungsform, in der der Freiwinkel des Zerspanungswerkzeugs der ersten Hauptschneide 0° beträgt. Um hier eine Kollision mit der Innenwandung des durch eine Bohrung ausgebildeten Hohlzylinders zu vermeiden, ist also vorgesehen, dass der Schneidenkörper in seiner Rotationsbewegung etwas schräg angestellt wird, sodass er trotz nicht vorhandenem Freiwinkel hinter der Schneidkante einen winkligen Freiraum erzeugt, einen sogenannten Wirkfreiwinkel.

Mit der vorliegenden Erfindung wird auch ein Verfahren zur Entgratung einander durchdringender Bohrungen, insbesondere von Bohrungen, die schräg zueinander verlaufen und/ oder deren Längsachsen keinen gemeinsamen Schnittpunkt aufweisen, mittels eines erfindungsgemäßen Zerspanungswerkzeugs oder einem erfindungsgemäßen Zerspanungssystem zur Verfügung gestellt, wobei der Neigungswinkel ε zwischen den einander durchdringenden Bohrungen 25° bis 90° beträgt.

In speziellen Ausführungsformen können auch Bohrungen entgratet werden, die einen Neigungswinkel ε bis zu 95° zueinander aufweisen, in Abhängigkeit von der dort vorhandenen Form des Grates.

Unter dem Begriff der Bohrungen sollen im vorliegenden Fall auch andere Hohlzylinder zu subsumieren sein, die einander durchdringen, wie z.B. Rohre.

Dieser Neigungswinkel ε ist dabei zwischen den Längsachsen bzw. Mittenachsen der einander durchdringenden Bohrungen zu messen.

Das bedeutet, dass die Auswahl des Werkzeugs bzw. dessen Winkels der ersten Hauptschneide anhand des Winkels zwischen den Bohrungen zu treffen ist.

So ist insbesondere vorgesehen, dass für einen jeweiligen Neigungswinkel ε zwischen den einander durchdringenden Bohrungen ein Zerspanungswerkzeug mit dem Winkel α zwischen der Schneidkante der ersten Hauptschneide und der Längsachse zu verwenden ist:
i) für ε= 85°-90°ein Zerspanungswerkzeug mit α = 80° bis 95°, insbesondere 85°,
ii) für ε= 70°-85°; insbesondere ε= 75° ein Zerspanungswerkzeug mit α = 95° bis 110°, insbesondere 100°,
iii) für ε= 55°-70°; insbesondere ε= 60° ein Zerspanungswerkzeug mit α = 110° bis 125°, insbesondere 115°,
iv) für ε= 45°-55°; insbesondere ε= 50° ein Zerspanungswerkzeug mit α = 125° bis 135°, insbesondere 130°, und/ oder
v) für ε= 25°-40°; insbesondere ε= 30° ein Zerspanungswerkzeug mit α = 135° bis 150°, insbesondere 145°.

In einer vorteilhaften Ausführungsform des erfindungsgemäßen Verfahrens ist vorgesehen, dass der Schneidenkörper derart in Bezug zum zu entgratenden Werkstück geführt wird, dass eine Spanfläche der ersten Hauptschneide in einem Nachziehwinkel in Bezug zu einer im Berührungspunkt der Schneidkante der ersten Hauptschneide am zu entgratenden Werkstück an die Bewegungsbahn der ersten Hauptschneide angelegten Tangente geführt wird, der geringer ist als 90°. Entsprechend wird ein sogenannter Nachziehwinkel beim Entgraten eingestellt, während das Zerspanungswerkzeug rotiert.

Dies betrifft insbesondere die Ausführungsform, in der der Freiwinkel des Zerspanungswerkzeugs der ersten Hauptschneide 0° beträgt. Um hier eine Kollision mit der Innenwandung des durch eine Bohrung ausgebildeten Hohlzylinders zu vermeiden, ist also vorgesehen, dass der Schneidenkörper in seiner Rotationsbewegung etwas schräg angestellt wird, sodass er trotz nicht vorhandenem Freiwinkel hinter der Schneidkante einen winkligen Freiraum erzeugt, einen sogenannten Nachziehwinkel. Der Nachziehwinkel wiederum bewirkt einen sogenannten Wirkfreiwinkel.
Dieser Nachziehwinkel von weniger als 90° ist in Richtung der Seite geöffnet, von der sich das Zerspanungswerkzeug bzw. die erste Hauptschneide beim Entgraten weg bewegt.

Weiterhin kann das Verfahren zur Entgratung einander durchdringender Bohrungen derart durchgeführt werden, dass das Zerspanungswerkzeug alternierend in entgegengesetzten Drehrichtungen rotiert wird, wobei der Schneidenkörper derart in Bezug zum zu entgratenden Werkstück geführt wird, dass eine Spanfläche einer zweiten Hauptschneide in einem Nachziehwinkel in Bezug zu einer im Berührungspunkt der Schneidkante der zweiten Hauptschneide am zu entgratenden Werkstück an die Bewegungsbahn der zweiten Hauptschneide angelegten Tangente geführt wird, der geringer ist als 90°.

Dabei können auch geringe Pausen im Wechsel zwischen den Drehrichtungen realisiert werden. Des Weiteren ist insbesondere vorgesehen, dass die Rotationen mit einem translatorischen Bewegungsanteil überlagert werden, um die Kurvenbahnen an einander durchdringenden Bohrungen entgraten zu können.

Dabei soll bei entgegengesetzter Rotation des Zerspanungswerkzeugs eine Spanfläche der zweiten Hauptschneide auch in einem Nachziehwinkel in Bezug zu einer im Berührungspunkt der zweiten Hauptschneide am zu entgratenden Werkstück an die Bewegungsbahn der zweiten Hauptschneide angelegten Tangente geführt werden, der geringer ist als 90°.

Das bedeutet, dass der Nachziehwinkel entgegengesetzt eingestellt wird.

Dabei kann das Verfahren derart ausgeführt werden, dass bei einem Neigungswinkel ε von einander durchdringenden Bohrungen von 25° bis 90° das Zerspanungswerkzeug mit Rotationsbewegungen in einem Drehwinkel von maximal 30° bewegt wird.

Insbesondere wird dabei das Zerspanungswerkzeug im Punkt des geringsten Neigungswinkels ε an die zu entgratende Kante herangefahren und von dort der Entgratungsvorgang begonnen. Das bedeutet, dass von diesem Punkt ausgehend die Rotationsbewegung so weit ausgeführt wird, bis der Kantenwinkel θ zwischen dem Hohlzylinderflächen der Bohrungen am jeweiligen Punkt der Anlage der Hauptschneide gleich groß ist wie der Neigungswinkel ε, der durch die Längsachse der beiden Bohrungen eingeschlossen ist.

In den meisten Fällen kann davon ausgegangen werden, dass die Rotationsbewegung so weit ausgeführt wird bzw. die Drehbewegung in einem Winkel erfolgt, der nicht größer ist als 30°.

Entsprechend wird also der Entgratungsvorgang entlang eines aufsteigenden Winkels ε vorgenommen.

Ist das Ende des vorgesehenen Winkelbereichs erreicht, wird die Drehbewegung umgekehrt, wobei der Punkt mit dem geringsten Winkel ε überfahren werden kann und die Drehbewegung in dieser entgegengesetzten Drehrichtung weitergeführt werden kann, bis wiederum das Ende des vorgesehenen Winkelbereichs erreicht ist.

Derart ist sichergestellt, dass die schräg angestellte Hauptschneide nur dann im Eingriff mit der zu entgratenden Kante ist, wenn der Winkel zwischen den Bohrungen derart gering ist, dass die schräg angestellte Hauptschneide effizient Grat am Übergang der Bohrungen entfernen kann.

Nach Erreichung des Endes des vorgesehenen Winkelbereiches wird die jeweilige Hauptschneide außer Eingriff gebracht, und der Entgratungsvorgang kann mit einer Nebenschneide fortgesetzt werden.

Insofern der Neigungswinkel ε der einander durchdringenden Bohrungen 90° oder mehr betragen sollte, kann eine vollständig umlaufende Drehbewegung zur Entgratung vorgenommen werden.

Mit dem erfindungsgemäßen Verfahren lässt sich in optimaler Weise eine dreidimensional verlaufende Kante, wie sie insbesondere von einander schräg durchdringenden und/ oder kreuzenden Bohrungen ausgebildet ist, entgraten. Dabei ist das Verfahren nicht auf die Bearbeitung von aneinander angeschlossenen Rohren eingeschränkt, sondern lässt sich auch an Körpern oder Gegenständen einsetzen, deren Innenseiten hohlzylinderförmig ausgebildet sind, deren Außenseiten jedoch nahezu jede beliebige Form aufweisen können.

Das Zerspanungswerkzeug kann dabei durch ein zweites Ende des Hohlzylinders eingefahren werden, welches dem ersten Ende des Hohlzylinders gegenüberliegt, wobei dieses erste Ende des Hohlzylinders den zu entfernenden Grat aufweist und in einer weiteren Bohrung bzw. einem weiteren Hohlzylinder endet, sodass das zweite Ende des Hohlzylinders dieser weiteren Bohrung bzw. diesem weiteren Hohlzylinder gegenüber beabstandet angeordnet ist.

Die rotatorische und translatorische Bewegung des Schneidenkörpers relativ zum Hohlzylinder kann dadurch ausgeführt werden, dass der Hohlzylinder bzw. das Werkstück fixiert ist und der Schneidenkörper rotatorisch und translatorisch bewegt wird. Es ist jedoch nicht die Alternative ausgeschlossen, bei der wenigstens eine der Bewegungen Rotation und Translation vom Hohlzylinder bzw. Werkstück ausgeführt wird und in dieser Bewegungsart der Schneidenkörper fixiert ist oder eine gegenläufige Bewegung ausführt. Demzufolge besteht zwischen der Rotation und der Translation ein steuerungstechnischer Zusammenhang, der vorzugsweise über eine Drei- oder Sechs-Achsen-Steuerung ausgeführt wird. Dadurch lässt sich die dreidimensionale Kante zumindest abschnittsweise in ihrem dreidimensionalen Verlauf abfahren.

Mittels rotatorischer und translatorischer Bewegungen ist das Verfahren demzufolge insbesondere geeignet, den Grat an einer Kante zu entfernen, die durch zwei sich kreuzende Bohrungen entsteht, wobei die Bohrungen einen Neigungswinkel ε von weniger als 95 ° einschließen. Die dabei entstehende Durchdringungskante im größeren Rohr weist in Draufsicht die Form eines Ovals auf, wobei bei einem Neigungswinkel ε von 90 ° zwischen den Bohrungen dieses Oval ein Kreis ist. Die ovale, den Grat aufweisende Kante verläuft dabei zwischen einer Maxima-Ebene, die durch die Maxima der Kantenkurve verläuft, und einer Minima-Ebene, die durch die Minima der Kantenkurve verläuft, wobei die Maxima-Ebene und die Minima-Ebene jeweils senkrecht zu der Ebene stehen, in der der Winkel ε zwischen den Hohlzylindern aufgespannt ist, zueinander jedoch parallel verlaufen.

Insbesondere kann das erfindungsgemäße Verfahren derart durchgeführt werden, dass vor der Entgratung die theoretischen Achsen der einander kreuzenden Bohrungen festgestellt werden und dann die Rotationsachse und/ oder die Längsachse des Zerspanungswerkzeuges derart positioniert werden, dass diese mit einer der theoretischen Achsen der Bohrungen übereinstimmt oder auch parallel dazu ausgerichtet ist.

In vorteilhafter Weise wird das erfindungsgemäße Verfahren mittels eines mehrachsigen Industrieroboters ausgeführt.

Dabei sollten die Programmierung der Ausrichtung des Schneidenkörpers so erfolgen, dass die jeweilige im Eingriff befindliche Schneidkante immer im rechten Winkel zur Gratbasis steht.

Die Erfindung wird im Folgenden anhand der in den beiliegenden Zeichnungen dargestellten Ausführungsbeispiele erläutert.

Es zeigen:
Figur 1: zwei einander durchdringenden Bohrungen in Ansicht von der Seite,
Figur 2: den Aufbau des Schneidenkörpers des erfindungsgemäßen Zerspanungswerkzeugs in perspektivischer Ansicht,
Figur 3: den Schneidenkörper in Ansicht von vorn,
Figur 4: den Schneidenkörper in Ansicht von vorn beim Entgratungsvorgang,
Figur 5: eine Ausführungsform des erfindungsgemäßen Zerspanungswerkzeugs in Ansicht von der Seite mit theoretisch realisierten mehreren ersten Hauptschneiden,
Figur 6: vergrößerte Darstellung die theoretisch realisierten mehreren ersten Hauptschneiden,
Figur 7: das erfindungsgemäße Zerspanungswerkzeug beim Entgratungsvorgang in einer ersten Position,
Figur 8: das erfindungsgemäße Zerspanungswerkzeug beim Entgratungsvorgang in einer zweiten Position, und
Figur 9: das Zerspanungswerkzeug in einer weiteren Ausführungsform in Ansicht von der Seite.

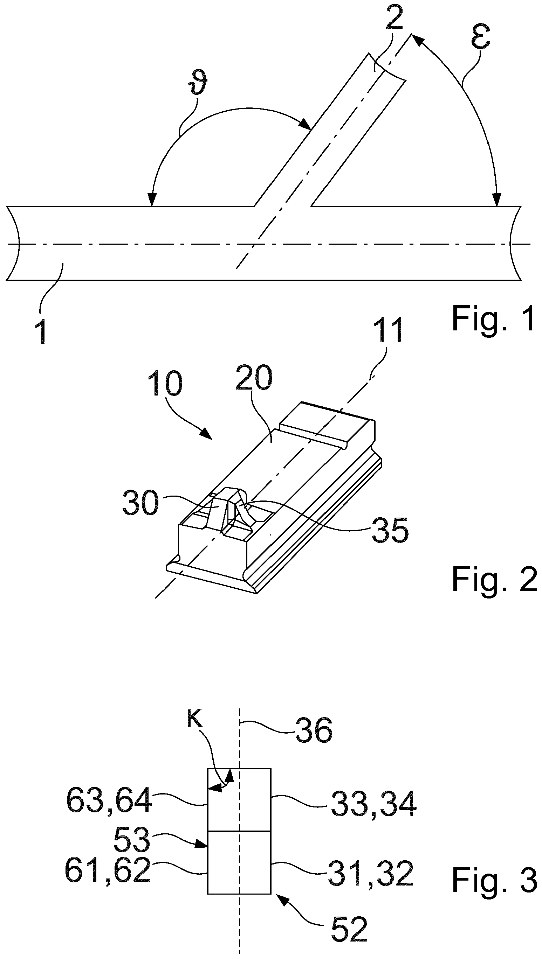

Figur 1 zeigt 2 einander durchdringenden Bohrungen, wobei deutlich eine Hauptbohrung 1 und eine seitlich und schräg in die Hauptbohrung 1 mündende Nebenbohrung 2 erkennbar sind. Zwischen der Hauptbohrung 1 und der Nebenbohrung 2 ist ein Neigungswinkel ε realisiert, der zwischen den Längsachsen der beiden Bohrungen 1 und 2 zu messen ist.

Zwischen den Außenflächen der Hauptbohrung und der Nebenbohrung 2 ist ein Kantenwinkel θ ausgebildet. Es ist ersichtlich, dass sich der Kantenwinkel θ in Abhängigkeit vom Neigungswinkel ε einstellt.

Bei derartigen Durchdringungen bzw. Mündungen von Bohrungen kommt es häufig zu einer Gratbildung im Übergang zwischen der Hauptbohrung 1 und der Nebenbohrung 2.

Sinn und Zweck der vorliegenden Erfindung ist es, in effizienter und sicherer sowie werkzeug- und werkstückschonender Weise den Grat zu entfernen.

Das in Figur 2 dargestellte Zerspanungswerkzeug 10 dient diesem Zweck. Das Zerspanungswerkzeug 10 umfasst einen Schneidenhalter 20, an dem der Schneidenkörper 30 seitlich auskragend angeordnet ist. Der Schneidenkörper 30 kann dabei relativ in Bezug zum Schneidenhalter 20 bewegbar sein, insbesondere in Richtung auf die Längsachse 11, welche im Wesentlichen durch die Form und Erstreckung des Schneidenhalters 20 definiert ist.

Ersichtlich ist, dass der Schneidenkörper 30 als herauskragendes Element von einer Schulter 35 gestützt ist, wobei das erfindungsgemäße Zerspanungswerkzeug 10 nicht auf diese Ausführungsform eingeschränkt ist.

Figur 3 zeigt den Schneidenkörper 30 in Ansicht von vorn, also entlang der Richtung der in Figur 2 angedeuteten Längsachse 11.

Hier ist ersichtlich, dass an beiden Seiten des Schneidenkörpers 30, nämlich in einer ersten Ebene 52 eine erste Hauptschneide 31 ausgebildet ist, und daran anschließend eine erste Nebenschneide 33 ausgebildet ist. Gespiegelt um eine Mittenachse 36 des Schneidenkörpers 30 ist in einer zweiten Ebene 53 eine zweite Hauptschneide 61 angeordnet, und daran anschließend eine zweite Nebenschneide 63.

Entsprechend ist der Schneidenkörper 30 an seinen Kanten beidseitig durch die Schneidkante der ersten Hauptschneide 32, die Schneidkante der ersten Nebenschneide 34, die Schneidkante der zweiten Hauptschneide 62 und die Schneidkante der zweiten Nebenschneide 64 begrenzt. Aufgrund des rechteckigen Profils in der Ansicht von vorne weist somit der Schneidenkörper 30 an seinen Haupt- und Nebenschneiden einen Keilwinkel κ von 90° auf. Entsprechend bildet sich ein Freiwinkel von 0° aus.

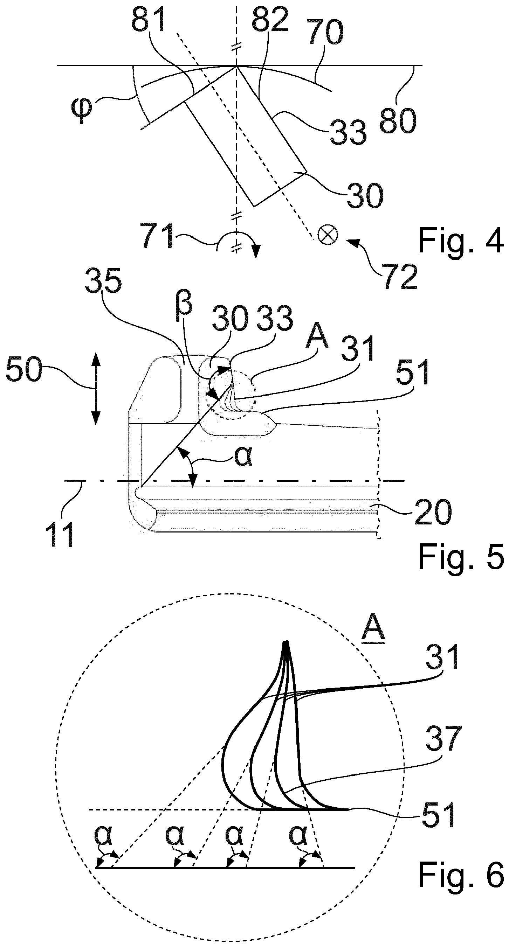

Figur 4 zeigt das Zerspanungswerkzeug 10 in Ansicht von vorn im Einsatz bei der Entgratung. Dabei ist ersichtlich, dass das Zerspanungswerkzeug 10 mit seiner ersten Nebenschneide 33 an der Innenwandung einer zu entgratenden Bohrung 70 in einer Rotationsbewegung 71 entlang bewegt wird. Gleichzeitig vollzieht das Zerspanungswerkzeug 10, um das räumliche Oval an der Stelle der Durchdringung der Bohrungen abzufahren, eine translatorische Bewegung 72.

Hier ist des Weiteren ersichtlich, dass der Schneidenkörper 30 schräg in Bezug zu einer im Berührungspunkt an der Innenwandung der zu entgratenden Bohrung 70 angelegten Tangente 80 gestellt ist und derart in der Rotationsbewegung 71 geführt ist. Dadurch erzeugt der Schneidenkörper 30 einen sogenannten Nachziehwinkel ϕ, der zwischen dieser Tangente 80 und der Freifläche 81 des Schneidenkörpers 30 ausgebildet ist. Aufgrund der Einstellung dieses Nachziehwinkels ϕ bildet sich ein Wirkfreiwinkel aus.

Dieser Nachziehwinkel ϕ ist insbesondere dann zu realisieren, wenn der Freiwinkel zwischen der Spanfläche 82 und der Freifläche 81 an der betreffenden Schneidkante 0° ist. Derart wird verhindert, dass die Freifläche 81 reibend an der Innenwandung der zu entgratenden Bohrung 70 entlang geführt wird.

Figur 5 zeigt das erfindungsgemäße Zerspanungswerkzeug 10 von der Seite. Hier ist noch einmal deutlich der Schneidenkörper 30 erkennbar, der aus dem Schneidenhalter 20 hervorsteht. Der Schneidenkörper 30 ist entlang einer Richtung der Verschiebbarkeit 50 im Wesentlichen senkrecht zur Längsachse 11 verschiebbar und insbesondere federnd gelagert, um Toleranzen beim Entgraten ausgleichen können, bei Gewährleistung der dauerhaften Anlage an der zu entgratenden Kontur.

Zu diesem Zweck dient auch ein Anlageelement 51, welches sich am Fuß der ersten Hauptschneide 31 befindet und in den Schneidenhalter 20 übergeht. Mithilfe dieses Anlageelements 51 kann das Zerspanungswerkzeug 10 an der Innenwandung einer zu entgratenden Bohrung gleitend entlang geführt werden, und somit immer einen definierten Abstand zwischen der ersten Hauptschneide 31 und dieser Innenwandung der zu entgratenden Bohrung einhalten.

Figur 5 zeigt zudem den Verlauf mehrerer theoretisch möglicher erster Hauptschneiden 31. Das bedeutet, dass das in Figur 5 dargestellte Zerspanungswerkzeug 10 nicht die mehreren dort gezeigten ersten Hauptschneiden 31 aufweist, sondern immer nur jeweils eine davon.

Bereits aus Figur 5 ist aber auch ersichtlich, dass sich die jeweilige erste Hauptschneide 31 in einem Winkel α im Bezug zur Längsachse 11 erstreckt.

Figur 6 zeigt das in Figur 5 angedeutete Detail A in vergrößerter Ansicht. Hier sind noch einmal die theoretisch möglichen Verläufe einer jeweiligen ersten Hauptschneide 31 dargestellt. Es ist ersichtlich, dass im Fußbereich einer jeweiligen ersten Hauptschneide diese mit einer Rundung 37 in das Anlageelement 51 übergeht. Des Weiteren ist ersichtlich, dass die jeweilige erste Hauptschneide einen unterschiedlichen Winkel α in Bezug zu der Längsachse 11 bzw. einer parallel dazu verlaufenden Ebene aufweisen kann. Dieser Winkel α ist entsprechend des Neigungswinkels ε zu wählen. Das bedeutet, dass bei kleinem Neigungswinkel ε ein Zerspanungswerkzeug 10 mit einem entsprechend großen Winkel α zu wählen ist, und umgekehrt.

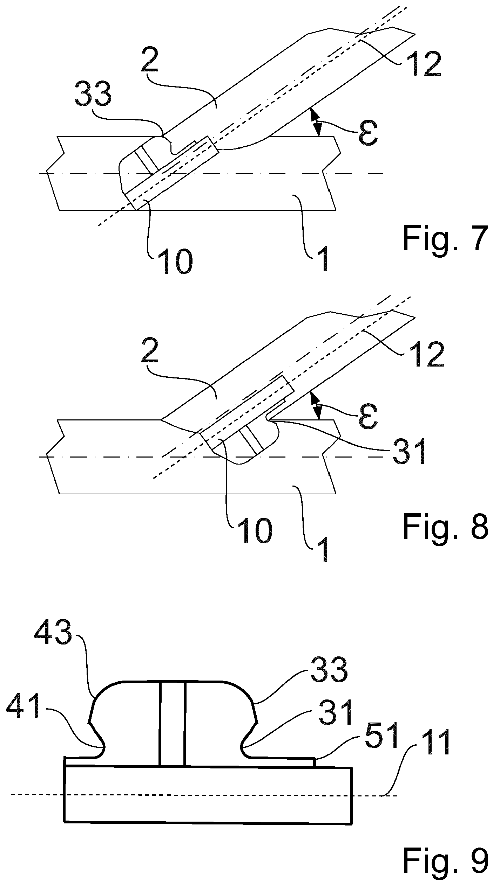

Der Einsatz des Zerspanungswerkzeugs 10 bei der Entgratung von einander durchdringenden Bohrungen 1,2 wird aus den Figuren 7 und 8 deutlich.

Figur 7 zeigt dabei den Einsatz der ersten Nebenschneide 33 am Übergang zwischen den Bohrungen 1,2. Entsprechend erfolgt hier das Verfahren zur Entgratung noch in herkömmlicher Weise durch den Eingriff einer konvexen Schneide, die durch die erste Nebenschneide 33 ausgebildet ist. Die konvexe Schneide wird dabei durch eine konkave mathematische Funktion ausgebildet.

Dagegen zeigt Figur 8 den Einsatz der ersten Hauptschneide 31 in dem Bereich der einander durchdringenden Bohrungen 1,2, der den geringsten Neigungswinkel ε aufweist. Es ist ersichtlich, dass hier die erste Hauptschneide 31 in ihrer Ausrichtung an den spitzwinkligen Übergang zwischen den Bohrungen 1,2 angepasst ist. Entsprechend kann in effizienter Weise mittels der ersten Hauptschneide 31 eine Entgratung an diesem Bereich vorgenommen werden. Dabei erfolgt eine hin und her pendelnde Bewegung des Zerspanungswerkzeugs 10, sodass die erste Hauptschneide 31 nicht weiter als 30° vom Punkt des geringsten Neigungswinkels ε abweicht. Die Rotationsachse 12, um die der Schneidenkörper 30 rotierert, ist dabei nicht zwingend die Längsachse des Zerspanungswerkzeugs 10, sondern kann außerhalb des Zerspanungswerkzeugs 10 liegen.

Für eine flexible Anwendung des Zerspanungswerkzeugs 10 können dessen erste Hauptschneide 31 und erste Nebenschneide 33 sowie auch die in der zweiten Ebene angeordneten Hauptschneide und Nebenschneide um eine Achse senkrecht zur Längsachse 11 gespiegelt sein, sodass der Schneidenkörper 30 des Weiteren eine gespiegelte erste Hauptschneide 41 sowie eine daran im Wesentlichen anschließende gespiegelte erste Nebenschneide 43 aufweist. Mit diesen gespiegelten Schneiden 41,43 lassen sich in flexibler Weise weitere Entgratungsvorgänge an einander durchdringenden Bohrungen vornehmen.

**Bezugszeichenliste**

| | |
|---|---|
| Hauptbohrung | 1 |
| Nebenbohrung | 2 |
| Zerspanungswerkzeug | 10 |
| Längsachse | 11 |
| Rotationsachse | 12 |
| Schneidenhalter | 20 |
| Schneidenkörper | 30 |
| erste Hauptschneide | 31 |
| Schneidkante der ersten Hauptschneide | 32 |
| erste Nebenschneide | 33 |
| Schneidkante der ersten Nebenschneide | 34 |
| Schulter | 35 |
| Mittenachse | 36 |
| Rundung | 37 |
| gespiegelte erste Hauptschneide | 41 |
| gespiegelte erste Nebenschneide | 43 |
| Richtung der Verschiebbarkeit | 50 |
| Anlageelement | 51 |
| erste Ebene | 52 |
| zweite Ebene | 53 |
| zweite Hauptschneide | 61 |
| Schneidkante der zweiten Hauptschneide | 62 |
| zweite Nebenschneide | 63 |
| Schneidkante der zweiten Nebenschneide | 64 |
| Innenwandung einer zu entgratenden | |
| Bohrung | 70 |
| Rotationsbewegung | 71 |
| translatorische Bewegung | 72 |
| Tangente | 80 |
| Freifläche | 81 |
| Spanfläche | 82 |
| Neigungswinkel | ε |
| Kantenwinkel | θ |
| Winkel | α |
| Winkel zwischen den Schneidkanten | β |
| Keilwinkel der ersten Hauptschneide | K |
| Nachziehwinkel | ϕ |

## Patentansprüche

1. Zerspanungswerkzeug, insbesondere zur Entgratung von Kanten in Hohlräumen, wie zur Entgratung einander durchdringender Bohrungen (1,2), insbesondere von Bohrungen (1,2), die schräg zueinander verlaufen und/ oder deren Längsachsen keinen gemeinsamen Schnittpunkt aufweisen,
umfassend einen sich entlang einer Längsachse (11) erstreckenden Schneidenhalter (20) sowie einen daran angeordneten Schneidenkörper (30), der eine erste Hauptschneide (31) aufweist, deren Schneidkante (32) in einem Winkel α von 80° bis 145° zur Längsachse (11) verläuft, zwecks Entgratung von wenigstens einer Kante an einem Übergang zwischen einander durchdringender Bohrungen (1,2) in einem Neigungswinkel ε von 25° bis 90°.

2. Zerspanungswerkzeug nach Anspruch 1, **dadurch gekennzeichnet, dass** der Winkel α beträgt:
i) zwischen 80° und 95°, insbesondere 85°,
ii) zwischen 95° und 110°, insbesondere 100°,
iii) zwischen 110° und 125°, insbesondere 115°,
iv) zwischen 125° und 135°, insbesondere 130°, oder
v) zwischen 135° und 150°, insbesondere 145°.

3. Zerspanungswerkzeug nach einem der vorhergehenden Ansprüche, **dadurch gekennzeichnet, dass** am Schneidenkörper (30) eine erste Nebenschneide (33) ausgebildet ist, deren Schneidkante (34) in einem Winkel zwischen den Schneidkanten β von 10° bis 150°, insbesondere 115°, zur Schneidkante (32) der ersten Hauptschneide (31) verläuft.

4. Zerspanungswerkzeug nach einem der vorhergehenden Ansprüche, **dadurch gekennzeichnet, dass** der Schneidenkörper (30) in Bezug zur Längsachse (11) im Wesentlichen senkrecht verschiebbar gelagert ist.

5. Zerspanungswerkzeug nach einem der vorhergehenden Ansprüche, **dadurch gekennzeichnet, dass** am Schneidenkörper (30) und im Wesentlichen um eine Achse, die senkrecht zur Längsachse (11) verläuft, gespiegelt der ersten Hauptschneide (31) gegenüberliegend eine gespiegelte erste Hauptschneide (41) ausgebildet ist.

6. Zerspanungswerkzeug nach einem der vorhergehenden Ansprüche, **dadurch gekennzeichnet, dass** der Freiwinkel der ersten Hauptschneide (31) 0° beträgt.

7. Zerspanungswerkzeug nach einem der vorhergehenden Ansprüche, **dadurch gekennzeichnet, dass** das Zerspanungswerkzeug ein Anlageelement (51) zur Anlage an einer Wandung einer Bohrung (1,2) aufweist.

8. Zerspanungswerkzeug nach einem der vorhergehenden Ansprüche, **dadurch gekennzeichnet, dass** der Schneidenkörper (30) in einer ersten Ebene (52) die erste Hauptschneide (31) ausbildet, wobei der Schneidenkörper (30) in einer zweiten Ebene (53), die im Wesentlichen parallel zur ersten Ebene (52) verläuft, eine zweite Hauptschneide (61) ausbildet, zur Entgratung von Kanten in Hohlräumen in entgegengesetzten Drehrichtungen.

9. Zerspanungssystem, insbesondere zur Entgratung von Kanten in Hohlräumen, wie zur Entgratung einander durchdringender Bohrungen (1,2), insbesondere von Bohrungen (1,2), die schräg zueinander verlaufen und/ oder deren Längsachsen keinen gemeinsamen Schnittpunkt aufweisen, mit einem Zerspanungswerkzeug gemäß einem der Ansprüche 1 bis 8, sowie mit einer Antriebseinrichtung zum Bewegen des Zerspanungswerkzeugs, wobei die Antriebseinrichtung dazu eingerichtet ist, das Zerspanungswerkzeug in einer kombinierten Bewegung um eine Rotationsachse (12) zu drehen, die parallel zur Längsachse (11) des Zerspanungswerkzeugs verläuft, und gleichzeitig das Zerspanungswerkzeug in einer translatorischen Bewegung (72) entlang der Längsachse (11) zu verschieben.

10. Zerspanungssystem nach Anspruch 9, **dadurch gekennzeichnet, dass** das Zerspanungssystem dazu eingerichtet ist, eine Spanfläche (82) der ersten Hauptschneide (31) in einem Winkel in Bezug zu einer im Berührungspunkt der Schneidkante (32) der ersten Hauptschneide (31) am zu entgratenden Werkstück an die Bewegungsbahn der ersten Hauptschneide (31) angelegten Tangente (80) zu führen, der geringer ist als 90°.

11. Verfahren zur Entgratung einander durchdringender Bohrungen, insbesondere von Bohrungen, die schräg zueinander verlaufen Bohrungen (1,2) und/ oder Bohrungen (1,2), deren Längsachsen keinen gemeinsamen Schnittpunkt aufweisen, mittels eines Zerspanungswerkzeugs gemäß einem der Ansprüche 1 bis 8 oder einem Zerspanungssystem gemäß einem der Ansprüche 9 und 10, wobei der Neigungswinkel ε zwischen den einander durchdringenden Bohrungen (1,2) 25° bis 90° beträgt.

12. Verfahren zur Entgratung einander durchdringender Bohrungen nach Anspruch 11, **dadurch gekennzeichnet, dass** für einen jeweiligen Neigungswinkel ε zwischen den einander durchdringenden Bohrungen (1,2) ein Zerspanungswerkzeug mit dem Winkel α zwischen der Schneidkante der ersten Hauptschneide (31) und der Längsachse (11) zu verwenden ist:
i) für ε= 85°-90°ein Zerspanungswerkzeug mit α = 80° bis 95°, insbesondere 85°,
ii) für ε= 70°-85°; insbesondere ε= 75° ein Zerspanungswerkzeug mit α = 95° bis 110°, insbesondere 100°,
iii) für ε= 55°-70°; insbesondere ε= 60° ein Zerspanungswerkzeug mit α = 110° bis 125°, insbesondere 115°,
iv) für ε= 40°-55°; insbesondere ε= 45° ein Zerspanungswerkzeug mit α = 125° bis 135°, insbesondere 130°, und/ oder
v) für ε= 25°-40°; insbesondere ε= 30° ein Zerspanungswerkzeug mit α = 135° bis 150°, insbesondere 145°.

13. Verfahren zur Entgratung einander durchdringender Bohrungen nach einem der Ansprüche 11 und 12, **dadurch gekennzeichnet, dass** der Schneidenkörper (30) derart in Bezug zum zu entgratenden Werkstück geführt wird, dass eine Spanfläche (82) der ersten Hauptschneide (31) in einem Nachziehwinkel (ϕ) in Bezug zu einer im Berührungspunkt der Schneidkante (32) der ersten Hauptschneide (31) am zu entgratenden Werkstück an die Bewegungsbahn der ersten Hauptschneide (31) angelegten Tangente (80) geführt wird, der geringer ist als 90°.

14. Verfahren zur Entgratung einander durchdringender Bohrungen nach Anspruch 13, **dadurch gekennzeichnet, dass** das Zerspanungswerkzeug alternierend in entgegengesetzten Drehrichtungen rotiert wird, wobei der Schneidenkörper (30) derart in Bezug zum zu entgratenden Werkstück geführt wird, dass eine Spanfläche einer zweiten Hauptschneide (61) in einem Nachziehwinkel (ϕ) in Bezug zu einer im Berührungspunkt der Schneidkante der zweiten Hauptschneide (61) am zu entgratenden Werkstück an die Bewegungsbahn der zweiten Hauptschneide (61) angelegten Tangente (80) geführt wird, der geringer ist als 90°.

15. Verfahren zur Entgratung einander durchdringender Bohrungen nach einem der Ansprüche 11 bis 14, **dadurch gekennzeichnet, dass** bei einem Neigungswinkel ε von einander durchdringenden Bohrungen (1,2) von 25° bis 90° das Zerspanungswerkzeug mit Rotationsbewegungen in einem Drehwinkel von maximal 30° bewegt wird.
